# FASCICULE DE BREVET EUROPEEN

(11) **EP 1 652 689 B1**
(45) Date de publication et mention de la délivrance du brevet: **29.06.2011**
(21) Numéro de dépôt: 05292152.5
(22) Date de dépôt: 13.10.2005
(51) Int. Cl.: B60B 21/12, B60C 17/04

(54) **Dispositif destiné à s'opposer au déjantage d'une enveloppe de pneumatique montée sur une jante de roue monobloc, procédé de fabrication de ce dispositif et ensemble monté l'incorporant**
Vorrichtung zum Festhalten eines Luftreifens auf einer Felge eines einteiligen Rads, korrespondierendes Herstellungsverfahren und montierte Einheit mit dieser Vorrichtung
Device for retaining a tire on a rim of a full face wheel, and method for its production and unit with such a mounted device

(30) Priorité: 28.10.2004 FR 0411512
(43) Date de publication de la demande: 03.05.2006
(73) Titulaire: HUTCHINSON, 75008 Paris (FR)
(72) Inventeur: Heuze, Olivier, 95290 L'Isle Adam (FR); Post, Cliff, Grand Island, NY 14072 (US); Duffy, Joe, North Tomawanda, NY 14120 (US)
(74) Mandataire: Bolinches, Michel Jean-Marie

(56) Documents cités:
- FR-A- 2 358 283
- FR-A- 2 396 664
- US-A- 5 435 368
- US-A1- 2003 160 501
- US-A1- 2003 188 817

## Description

La présente invention concerne un dispositif destiné à être monté dans un creux d'une jante de roue monobloc de sorte à s'opposer au déjantage d'une enveloppe de pneumatique montée sur ladite jante, un procédé de fabrication de ce dispositif et un ensemble monté pour véhicule automobile comprenant ladite jante, ladite enveloppe et ledit dispositif.

D'une manière connue, une jante de roue monobloc comporte obligatoirement un creux de jante circonférentiel pour permettre le montage des talons d'une enveloppe de pneumatique sur deux sièges axialement interne et externe de la jante, qui se terminent respectivement par des rebords de la jante. On monte usuellement l'enveloppe sur la jante en positionnant l'un après l'autre les talons de l'enveloppe autour de la jante par-dessus l'un des rebords de jante, grâce au creux de jante, puis en procédant au gonflage de sorte à plaquer les talons sur les sièges de jante et contre les rebords de jante.

On sait qu'un déjantage de l'enveloppe peut se produire en roulage, notamment lors d'une chute de la pression de gonflage à l'intérieur de l'ensemble monté et/ou lorsqu'un effort transversal est appliqué à l'enveloppe, par exemple dû à la force centrifuge lors d'un virage pris à vitesse élevée. Dans ce cas, une zone circonférentielle de l'un des talons, typiquement du talon le plus proche du creux de jante dans le cas usuel d'une jante asymétrique, quitte son siège du fait des efforts exercés pour venir dans le creux de jante, ce qui fait passer la zone diamétralement opposée du même talon par-dessus le rebord de jante adjacent en faisant déjanter l'enveloppe.

On a cherché dans le passé à combler le creux de jante pour s'opposer à un tel déjantage de l'enveloppe.

Le document de Brevet US-A-5 435 368 décrit un dispositif en forme d'anneau pour combler le creux d'une jante de roue monobloc qui comporte, d'une part, une pluralité de segments creux flexibles en arc de cercle qui sont mis bout à bout autour d'une bande annulaire ouverte à ses extrémités et traversant ces segments et, d'autre part, un moyen de connexion de ces extrémités pour serrer le dispositif autour du creux de jante.

Les segments sont mis bout à bout de telle manière que les bords latéraux de deux segments consécutifs soient décalés transversalement, et la bande les traversant présente une face radialement interne en forme de « V » qui est conçue pour pouvoir glisser transversalement à l'intérieur des segments, de sorte à pousser ces derniers en alternance contre l'un et l'autre bords du creux de jante.

Un inconvénient majeur de ce dispositif, outre sa masse relativement élevée, réside dans la complexité de son assemblage et dans son diamètre interne, sa largeur et sa hauteur qui sont imposés par lesdits secteurs, ce qui le destine à équiper spécifiquement une jante de diamètre donné caractérisée par un creux de largeur et de profondeur prédéterminées.

Un but de la présente invention est de proposer un dispositif destiné à être monté dans un creux d'une jante de roue monobloc de sorte à s'opposer au déjantage d'une enveloppe de pneumatique montée sur ladite jante, ledit dispositif comportant une ceinture à deux extrémités et un moyen de connexion desdites extrémités entre elles qui est destiné à serrer ladite ceinture sous forme annulaire autour dudit creux, qui permette de remédier à cet inconvénient.

A cet effet, un dispositif selon l'invention est tel que ladite ceinture comporte une pluralité d'éléments de comblement, espacés entre lesdites extrémités, qui sont adaptés pour combler au moins partiellement ledit creux et qui sont reliés entre eux par l'intermédiaire d'au moins un élément souple de liaison destiné à former un secteur annulaire autour dudit creux.

On notera que ce caractère souple du ou des éléments de liaison destiné(s) à former des secteurs annulaires discontinus entre deux éléments de comblement adjacents confère au dispositif selon l'invention une flexibilité améliorée et, par conséquent, une facilité de montage accrue, en comparaison des dispositifs connus qui sont typiquement caractérisés par une structure continue relativement rigide.

On notera également que ledit dispositif selon l'invention est caractérisé par un unique moyen de connexion reliant les deux extrémités de ladite ceinture entre elles, ce qui facilite encore le montage de ce dispositif à une seule pièce et minimise sa masse.

Dans la présente description, on entendra par « ceinture » aussi bien une bande ou ruban en position fermée présentant une forme annulaire en montage autour du creux de jante, que cette même bande ou ruban présentant en position ouverte (i.e. avant montage sur la jante) une forme non annulaire.

Selon une autre caractéristique préférentielle de l'invention, ledit ou chaque élément de liaison s'étend sur tout le périmètre de ladite ceinture et il se termine par lesdites deux extrémités.

Selon un premier mode de réalisation de l'invention, ledit ou chaque élément de liaison comporte un câble métallique et/ou textile sensiblement inextensible s'étendant sur tout ledit périmètre et se terminant par lesdites extrémités.

Selon un second mode préférentiel de réalisation de l'invention, ledit élément de liaison comporte une bande souple, telle qu'une bande métallique, qui est apte à être déformée dans une direction radiale de la roue.

Selon une autre caractéristique de l'invention commune auxdits premier et second modes, chacun desdits éléments de comblement est traversé dans sa masse par ledit ou chaque élément de liaison et est solidarisé avec ce dernier par accrochage mécanique ou par collage, par exemple.

Conformément audit premier mode de réalisation selon l'invention, ledit accrochage mécanique est par exemple de type sertissage.

Conformément audit second mode de réalisation selon l'invention, ledit accrochage mécanique est par exemple de type vis-écrou.

Selon une autre caractéristique dudit second mode de réalisation de l'invention, lesdits éléments de comblement peuvent être respectivement rapportés par guidage transversal dans des glissières supérieures qui sont formées sur des supports solidarisés avec ladite bande souple.

On notera que le guidage transversal des éléments de comblement dans ces glissières supérieures se traduit par une structure de comblement modulaire et adaptable dans le sens de la largeur et de la hauteur (i.e. dans les directions axiales et radiales du creux de jante, respectivement).

Selon un exemple préférentiel dudit second mode de réalisation de l'invention, ladite ceinture comporte une pluralité d'embases qui sont respectivement rapportées sous lesdits supports recevant lesdits éléments de comblement et qui sont adaptées pour être montées sur un fond dudit creux de jante.

On notera que chaque élément de comblement et l'embase correspondante permettent respectivement de régler la largeur axiale et la hauteur radiale de ladite ceinture dans ledit creux.

Selon une autre caractéristique de cet exemple préférentiel, chaque embase est rapportée sous le support correspondant également par guidage transversal dans des glissières inférieures formées dans ledit support.

Avantageusement, chacune desdites glissières supérieures et inférieures peut alors présenter une section trapézoïdale en contre dépouille, telle qu'une section en queue d'aronde, de sorte à former un moyen d'accrochage mécanique de l'élément de comblement correspondant.

Selon une autre caractéristique de cet exemple préférentiel, chaque élément de comblement et chaque embase correspondante sont tous deux pourvus de moyens de positionnement et de maintien qui coopèrent avec le support correspondant, de sorte à positionner et maintenir l'élément de comblement et l'embase sur et sous ledit support, respectivement.

Selon une variante de réalisation de cet exemple préférentiel, ladite ceinture comporte plusieurs profilés de section en U, espacés entre lesdites extrémités, qui forment respectivement lesdits supports et qui comportent chacun une âme fixée sous ladite bande souple et deux ailes usinées en regard l'une de l'autre, de sorte à définir lesdites glissières.

Conformément à cette variante de réalisation, chaque élément de comblement présente avantageusement une saillie sur sa face de fond destinée à se trouver en regard du fond du creux de jante, cette saillie étant conçue pour venir buter contre la base d'une aile de l'un desdits profilés de sorte à permettre le centrage transversal de l'élément de comblement.

On notera que les dispositifs à bande souple selon ledit second mode de réalisation de l'invention présentent une légèreté et une flexibilité améliorées, en comparaison des dispositifs relativement rigides de l'état antérieur de la technique.

On notera également que les dispositifs selon ledit exemple préférentiel et selon ladite variante, tous deux relatifs audit second mode, présentent l'avantage d'être adaptables à toutes largeurs et profondeurs de creux de jante, de par le montage rapporté des éléments de comblement sur lesdits supports formant glissières.

Selon une autre caractéristique générale de l'invention, lesdits éléments de comblement peuvent être constitués au choix d'un matériau plastique ou élastomère, de préférence relativement rigide et, à titre encore plus préférentiel, d'un matériau plastique à base d'au moins un polymère thermoplastique, tel qu'un polyamide 6 ou un polyamide 6.6.

Conformément audit exemple préférentiel dudit second mode selon l'invention, lesdits supports et lesdites embases sont également constitués d'un matériau de type plastique ou élastomère, étant avantageusement constitués du même matériau que celui desdits éléments de comblement.

Conformément à ladite variante de cet exemple préférentiel, lesdits profilés formant support sont avantageusement métalliques, étant de préférence soudés sur ladite bande souple de façon à conférer une souplesse satisfaisante au dispositif correspondant.

Selon une autre caractéristique de l'invention relative audit premier mode de réalisation, ledit moyen de connexion peut comporter deux blocs d'accrochage dans lesquels sont respectivement fixées les deux extrémités ou les deux groupes d'extrémités en regard dudit ou desdits câbles et qui sont reliés entre eux par une vis les traversant, le degré de mise en tension dudit dispositif étant réglé par un écrou monté sur ladite vis contre l'un desdits blocs.

Concernant ledit second mode, ledit moyen de connexion comporte un doigt transversal qui est adapté pour être verrouillé d'une manière réversible sur un cran d'arrêt en forme de patte recourbée recouvrant ladite bande en l'une desdites extrémités de ladite ceinture et qui relie entre eux deux bras montés pivotants sur un axe transversal fixe de pivotement, lequel est solidaire de ladite bande en l'autre extrémité de ladite ceinture, ledit moyen de connexion comportant en outre un levier de commande monté pivotant sur un axe transversal mobile de pivotement qui excentré par rapport audit axe fixe, de telle sorte que ladite ceinture soit respectivement serrée ou relâchée en éloignant ou en rapprochant ledit axe mobile dudit doigt lors du pivotement dudit levier.

Selon un autre exemple préférentiel de réalisation de l'invention relatif audit second mode et avantageusement à ladite variante, ledit moyen de connexion comporte, d'une part, une tige en forme de T à bout fileté se terminant par une première barre transversale et, d'autre part, un fourreau en forme de T qui est monté coaxialement autour de ladite tige et qui se termine par une seconde barre transversale prévue à une distance réglable de ladite première barre pour le serrage de ladite ceinture, lesdites barres étant destinées à être respectivement bloquées contre deux zones de retournements de ladite bande souple formant lesdites extrémités de ladite ceinture.

De préférence, ledit moyen de connexion comporte en outre un élément de serrage de type écrou freiné qui est monté sur ledit bout fileté de ladite tige, contre une extrémité dudit fourreau, de sorte à déterminer le serrage de ladite ceinture en rapprochant ou en éloignant mutuellement lesdites barres.

De plus, ledit moyen de connexion peut comporter en outre une patte pourvue d'une butée de sécurité qui s'étend à partir de l'une des extrémités de ladite bande souple et qui est adaptée pour traverser une ouverture de ladite zone de retournement adjacente en étant rappelée élastiquement en butée contre un bord de ladite ouverture. On notera que cette butée de sécurité permet d'empêcher un relâchement de ladite ceinture dans le cas d'un desserrage accidentel dudit élément de serrage.

Un procédé de fabrication dudit dispositif selon l'invention comprend essentiellement un surmoulage desdits éléments de comblement ou desdits supports, dans le cas desdites première ou seconde variantes, sur ledit ou chaque élément de liaison.

Un ensemble monté pour véhicule automobile selon l'invention comprend une jante de roue monobloc, une enveloppe de pneumatique comportant deux talons respectivement montés sur deux sièges axialement interne et externe de ladite jante et un dispositif tel que défini ci-dessus qui est monté dans un creux de ladite jante de sorte à s'opposer au déjantage de ladite enveloppe.

Dans la présente description, les expressions « axialement interne » et « axialement externe » se réfèrent respectivement aux côtés de la jante de roue qui sont destinés à être tournés vers l'intérieur et vers l'extérieur du véhicule automobile, suite au montage sur un véhicule d'un ensemble monté comportant cette jante.

On notera que ledit dispositif selon l'invention peut combler en totalité ou en partie seulement ledit creux de jante dans sa largeur axiale et sa profondeur radiale. De préférence, ledit dispositif est adapté pour combler sensiblement ledit creux à la fois dans sa largeur et dans sa profondeur.

De préférence, ladite jante est de type asymétrique, ledit creux de jante étant adjacent audit siège axialement externe.

Egalement à titre préférentiel, ledit siège axialement externe est délimité axialement par un rebord externe de ladite jante et par un bossage circonférentiel s'étendant radialement vers l'extérieur et se prolongeant axialement et radialement vers l'intérieur par un bord axialement externe dudit creux de jante, ledit bossage étant adapté pour s'opposer à un glissement dans ledit creux dudit talon monté sur ledit siège axialement externe.

D'autres caractéristiques, avantages et détails de la présente invention ressortiront à la lecture de la description suivante de plusieurs exemples de réalisation de l'invention, donnés à titre illustratif et non limitatif, ladite description étant réalisée en référence avec les dessins joints, parmi lesquels :
la figure 1 est une vue partielle en perspective d'un dispositif selon un premier mode de réalisation de l'invention monté dans un creux d'une jante de roue monobloc,
la figure 2 est une vue partielle en perspective d'un dispositif selon un second mode préférentiel de réalisation de l'invention monté dans ledit creux de jante,
la figure 3 est une vue partielle en perspective d'un exemple selon l'invention d'un moyen de connexion qui est illustré en relation avec le dispositif de la figure 2,
la figure 4 est une vue en perspective d'un dispositif selon un exemple préférentiel dudit second mode de réalisation de l'invention monté dans ledit creux de jante,
la figure 5 est une vue partielle en perspective éclatée d'un détail A du dispositif illustré à la figure 4,
la figure 6 est une vue partielle en perspective semi-éclatée d'une variante de réalisation du dispositif de la figure 4 monté dans ledit creux de jante, et
la figure 7 est une vue partielle en perspective d'un autre exemple selon l'invention d'un moyen de connexion qui est illustré en relation avec le dispositif de la figure 6.

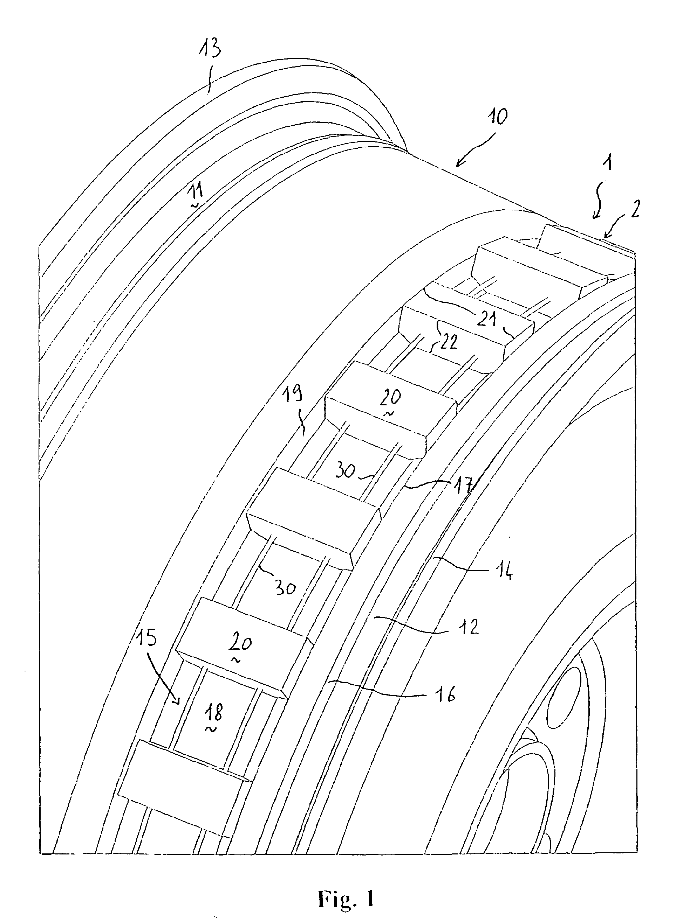

Un dispositif 1 selon un premier mode de réalisation de l'invention est illustré à la figure 1 dans une position de montage sur une jante de roue 10 monobloc.

La jante 10 comporte deux sièges axialement interne et externe 11 et 12 qui sont respectivement destinés à recevoir deux talons d'une enveloppe de pneumatique (non illustrée) et qui se terminent par des rebords axialement interne et externe 13 et 14. La jante 10 comporte un creux de jante 15 entre les sièges 11 et 12, qui est adapté pour permettre de manière connue le montage des talons de l'enveloppe sur les sièges 11 et 12.

Dans cet exemple de réalisation, la jante 10 est de type asymétrique, du fait que le creux de jante 15 est formé à proximité immédiate du siège axialement externe 12. Plus précisément, ce siège 12 est délimité axialement par le rebord externe 14 et par un bossage circonférentiel 16 (également appelé « hump » par l'homme du métier) s'étendant radialement vers l'extérieur et se prolongeant axialement et radialement vers l'intérieur par un bord axialement externe 17 du creux de jante 15, ce bossage 16 étant adapté pour s'opposer à un glissement dans le creux 15 du talon monté sur ce siège 12.

Le dispositif 1 comporte une ceinture 2 occupant à la figure 1 une position de serrage autour du creux 15 qui lui confère une géométrie annulaire. La ceinture 2 présente deux extrémités (non visibles à la figure 1), entre lesquelles sont disposés d'une manière espacée une pluralité d'éléments de comblement 20 identiques qui sont adaptés pour combler sensiblement le creux 15 dans sa largeur et sa hauteur et qui sont traversés dans leur masse par des éléments souples de liaison 30. Ces derniers sont constitués de deux câbles identiques qui s'étendent sur toute la circonférence de la ceinture 2. Les extrémités de la ceinture 2, qui sont formées par celles des câbles 30, sont reliées entre elles par un moyen de connexion (non illustré) qui est destiné à serrer la ceinture 2 autour du creux 15 avec une tension de serrage réglable.

Chaque élément de comblement 20 présente une structure pleine et, dans l'exemple de la figure 1, il est constitué d'un plot à base plate ou arrondie adapté pour épouser sensiblement, vu en section transversale, le contour du fond 18 du creux de jante 15 et de ses bords axialement externe 17 et interne 19. Dans l'exemple de la figure 1, chaque élément de comblement 20 est constitué d'un polyèdre à faces rectangulaires deux à deux identiques, et il est de préférence à base d'un polymère thermoplastique, tel qu'un polyamide 6 ou un polyamide 6.6.

Les câbles 30 sont prévus sensiblement inextensibles dans la direction circonférentielle et ils sont prévus souples dans la direction radiale de sorte à pouvoir former les secteurs annulaires illustrés à la figure 1. Ces câbles 30 traversent d'une manière centrée chaque élément de comblement 20, sensiblement à égale distance des arêtes latérales et radiales 21 et 22 de celui-ci. Chaque câble 30 peut être de type métallique et/ou textile.

Le moyen de connexion des deux paires d'extrémités de câbles 30 peut être par exemple constitué de deux blocs d'accrochage de hauteur réduite, dans la masse desquels sont respectivement fixées ces deux paires d'extrémités et qui sont reliés entre eux par une vis les traversant, le degré de mise en tension de la ceinture 1 étant réglé via un écrou monté sur la vis contre l'un desdits blocs.

La ceinture 2 est fabriquée par surmoulage des éléments de comblement 20 sur les deux câbles 30, et ces éléments 20 sont rendus solidaires des câbles 30, avantageusement par un sertissage de pièces métalliques sur les câbles 30 pour obtenir un accrochage satisfaisant des éléments 20.

Les dispositifs illustrés aux figures suivantes seront décrits ci-après en augmentant les références numériques de 100 pour chaque constituant d'un nouveau mode de réalisation présentant une structure analogue.

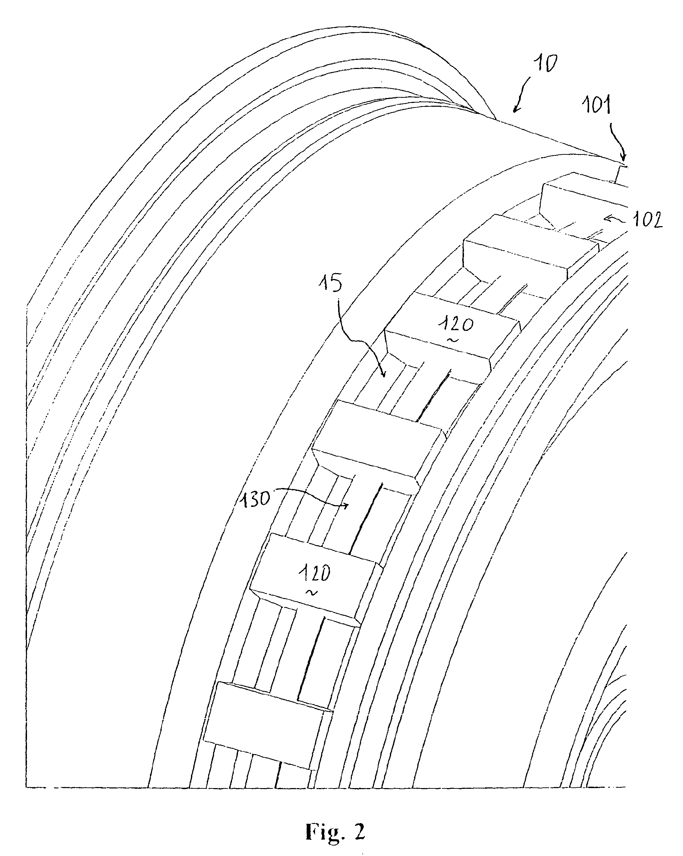

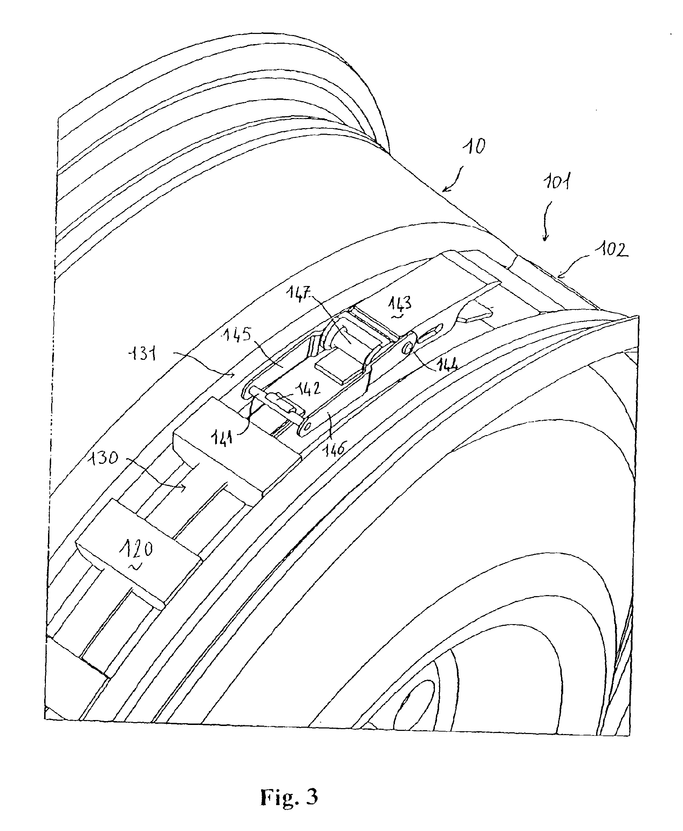

Un dispositif 101 selon un second mode de réalisation de l'invention est illustré aux figures 2 et 3 dans une position de montage sur la même jante de roue 10 monobloc.

Comme illustré à la figure 2, le dispositif 101 se différencie uniquement du dispositif 1 précité par les structures respectives de son unique élément souple de liaison 130 et de son moyen de connexion 140 (voir figure 3) des extrémités 131 et 132 de sa ceinture 102.

Cet élément souple de liaison 130 traverse dans leur masse des éléments de comblement 120 identiques auxdits éléments 20. Cet élément de liaison 130 est constitué d'une bande souple métallique qui s'étend sur toute la circonférence de la ceinture 102, de sorte que les extrémités de la bande 130 définissent celles de la ceinture 102.

Comme illustré à la figure 3, le moyen de connexion 140 de ces extrémités 131 et 132 est de type grenouillère, comportant un doigt transversal 141 qui est adapté pour être verrouillé d'une manière réversible sur un cran d'arrêt 142 en forme de patte recourbée recouvrant la bande 130 en l'une de ses extrémités 131 et qui relie entre eux deux bras 145 et 146 montés pivotants sur un axe transversal fixe de pivotement 144, lequel est solidaire de la bande 130 en l'autre extrémité 132 de la ceinture 102. Le moyen de connexion 140 comporte en outre un levier de commande 143 monté pivotant sur un axe transversal mobile de pivotement 147 qui excentré par rapport à l'axe fixe 144. On voit à la figure 3 que l'axe de pivotement mobile 147 du levier 143 est monté entre le doigt 141 et son axe de pivotement fixe 147.

En fonctionnement, la ceinture est respectivement serrée ou relâchée en éloignant ou en rapprochant l'axe mobile 147 du doigt 141 lors du pivotement du levier 143.

La ceinture 102 est fabriquée par surmoulage des éléments de comblement 120 sur la bande 130, et ces éléments 120 sont bloqués sur la bande 130 par exemple par accrochage mécanique sur une vis pourvue d'un écrou (non visible) qui est montée au niveau de chaque élément 120 à travers la bande 130. On peut ainsi avantageusement améliorer le blocage des éléments 120 sur la bande 130, en comparaison d'éléments 120 qui seraient surmoulés sur cette bande 130 sans accrochage mécanique.

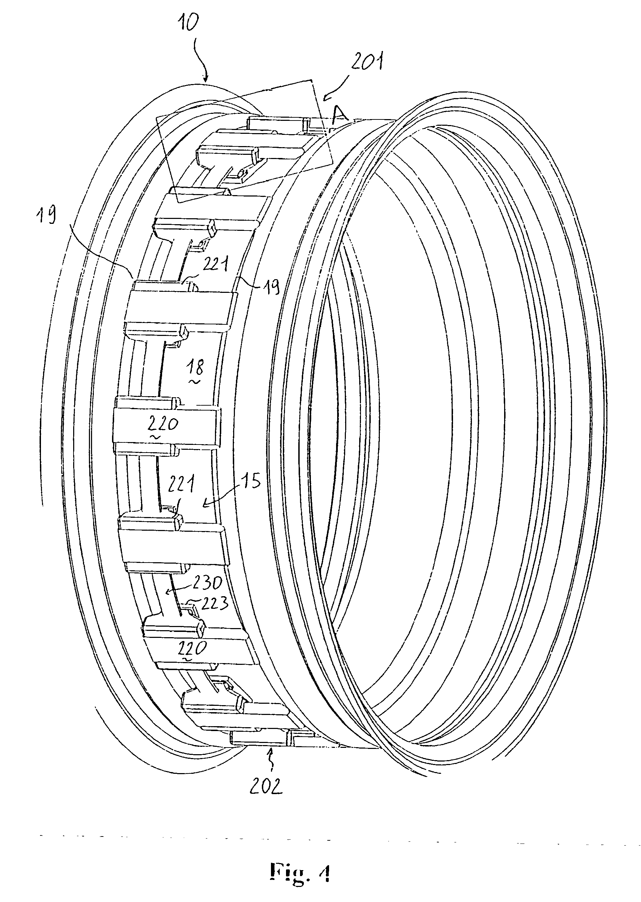

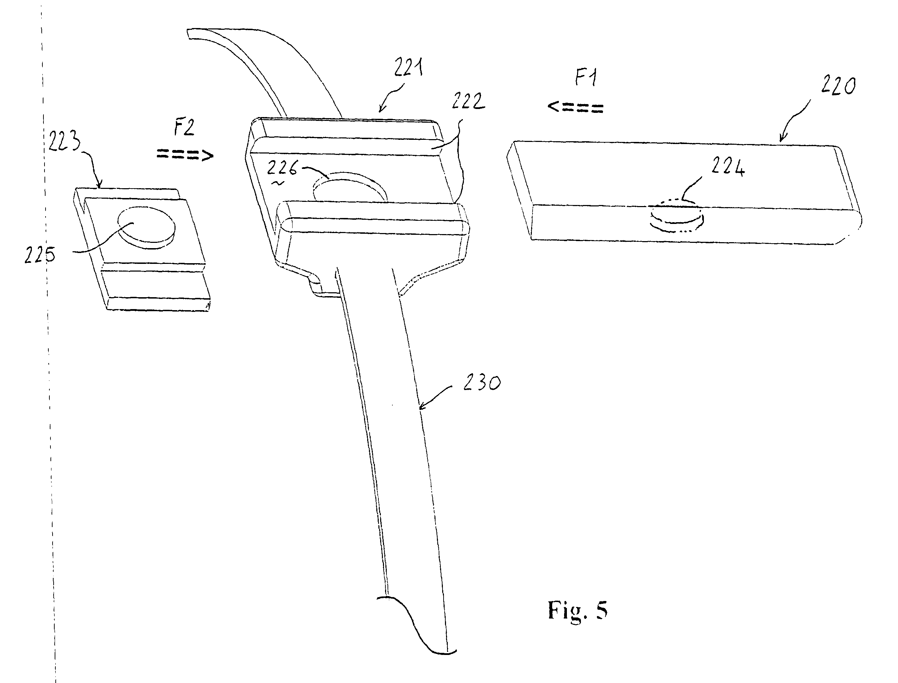

Un dispositif 201 selon une première variante dudit second mode de réalisation de l'invention est illustré, à la figure 4, dans une position de montage sur la même jante de roue 10 monobloc et, à la figure 5, sous une forme éclatée.

Comme illustré à la figure 5, le dispositif 201 se différencie uniquement du dispositif 101 des figures 2 et 3 en ce qu'il présente une structure modulaire le rendant adaptable à diverses largeurs et profondeurs de creux de jante. Les éléments de comblement 220 qu'il comporte sont respectivement rapportés par guidage transversal sur des supports 221 formant des glissières supérieures profilées 222 (voir la flèche F1 illustrant ce guidage), de sorte à pouvoir régler le comblement du creux de jante 15 dans le sens de la largeur axiale de ce dernier. Chaque glissière supérieure 222 présente, dans l'exemple de la figure 5, une section en queue d'aronde conçue pour immobiliser radialement un élément de comblement 220 de section trapézoïdale guidé en coulissement dans la glissière 222.

Les supports 221 sont solidarisés avec une bande 230 souple métallique analogue à la bande 130, par surmoulage de ces supports 221 sur la bande 230.

De plus, le dispositif 201 illustré à la figure 5 comporte une pluralité d'embases 223 qui sont respectivement rapportées sous les supports 221 par guidage transversal dans des glissières inférieures (non visibles) formées dans ces supports 221 (voir la flèche F2 illustrant ce guidage), de sorte à pouvoir régler le comblement du creux de jante 15 dans le sens de la hauteur radiale de ce dernier. De préférence, chaque embase est adaptée pour être montée sur le fond 18 du creux de jante 15 pour que la hauteur radiale de la ceinture 202 coïncide sensiblement avec celle des bords 17 et 19 du creux 15.

Chaque élément de comblement 220 et l'embase correspondante 223 peuvent être respectivement pourvus de pieds de positionnement et de maintien 224 et 225 qui coopèrent tous deux avec le bord d'un orifice 226 formé dans le support correspondant, de sorte à positionner et maintenir l'élément de comblement 220 et l'embase 223 sur et sous le support 221, respectivement.

Les supports 221 et les embases 223 sont constitués d'un matériau plastique, de préférence le même que celui des éléments de comblement 220.

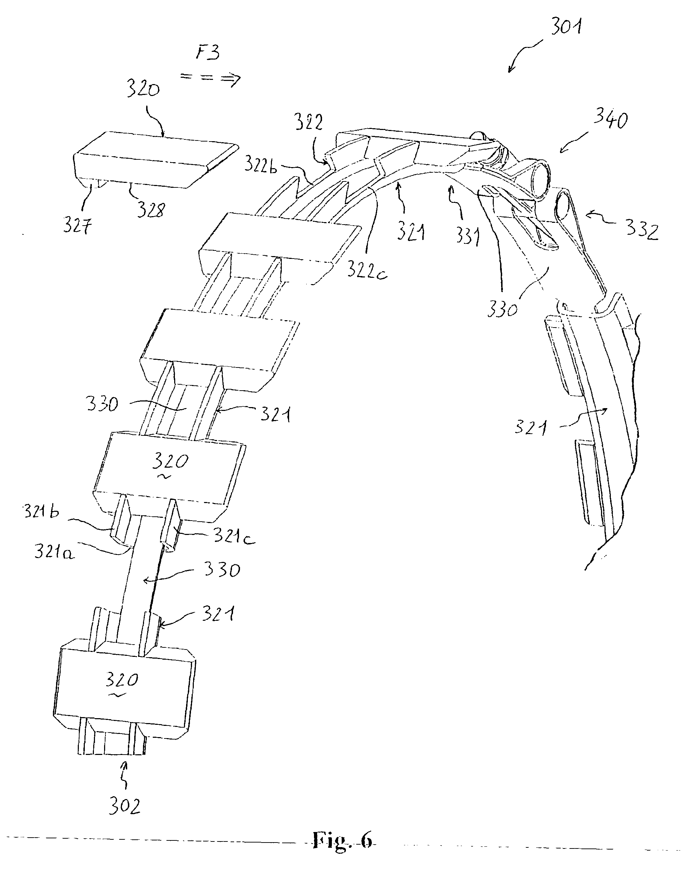

Un dispositif 301 selon une variante de celui des figures 4 et 5 est illustré, à la figure 6, dans une position fermée de serrage lui conférant une forme annulaire.

Le dispositif 301 se différencie du dispositif 201 des figures 4 et 5 par la structure des supports 321 formant des glissières 322 sur lesquelles sont respectivement rapportés les éléments de comblement 320, par le profil de ces derniers qui est adapté à ces supports 321 et par la structure du moyen de connexion 340 des extrémités 331 et 332 de la ceinture 302 de ce dispositif 301.

Les glissières 322 adaptées pour recevoir les éléments de comblement 320 (voir la flèche F3 sur la figure 6) sont formées dans des profilés 321 par exemple métalliques de section transversale en U qui sont soudés par points sur la bande souple 330, de sorte que l'ensemble de la ceinture 302 reste souple, et qui sont espacés circonférentiellement entre les extrémités 331 et 332. Plus précisément, chaque profilé 321 comporte une âme 321 a fixée sous la bande souple 330 et deux ailes 321 b et 321 c usinées en regard l'une de l'autre à intervalles circonférentiels, de sorte à définir les deux bords transversaux 322b et 322c des glissières 322. A l'instar des glissières 222 des figures 4 et 5, ces bords 322b et 322c présentent, dans l'exemple de la figure 6, une section en queue d'aronde conçue pour immobiliser radialement un élément de comblement 320 de section trapézoïdale guidé en coulissement dans la glissière 322.

De plus, chaque élément de comblement 320 présente une saillie 327 sur sa face de fond 328 destinée à se trouver en regard du fond 18 du creux de jante 15, cette saillie 327 étant conçue pour venir buter contre la base d'une aile 321 b d'un profilé 321 de sorte à permettre le centrage transversal de l'élément de comblement 320.

On notera en outre que les dispositifs 201, 301 selon l'invention, de par la structure modulaire de leurs ceintures 202, 302 comportant les éléments de comblement 220, 320 de dimensions variables rapportés sur les supports 221, 321, peuvent être adaptés aisément à différentes diamètres de jantes 10 et à différentes largeurs et profondeurs de creux de jante 15.

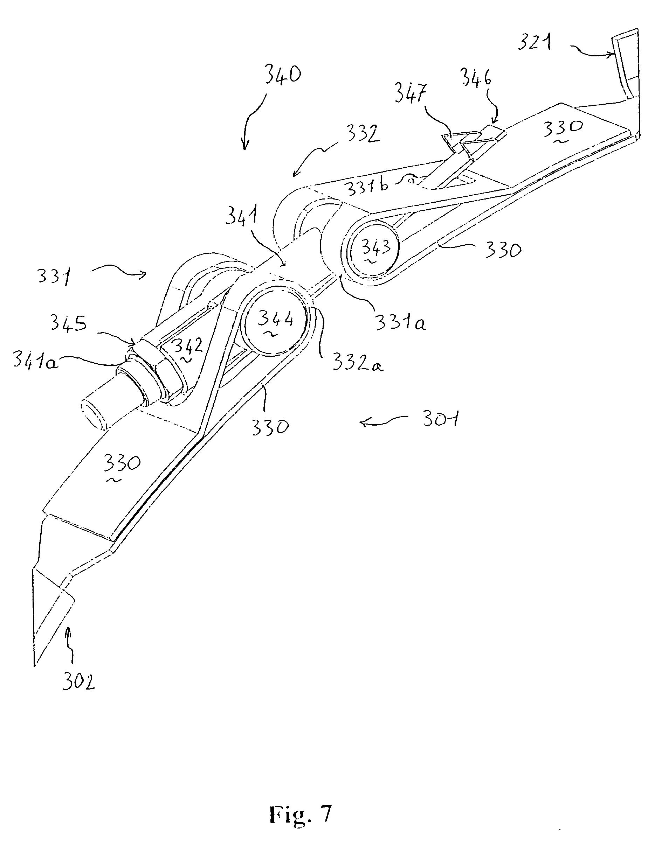

Le moyen de connexion 340 est illustré plus en détail à la figure 7. Il comporte essentiellement, d'une part, une tige 341 en forme de T à bout fileté 341a se terminant par une première barre transversale 343 et, d'autre part, un fourreau 342 en forme de T qui est monté coaxialement en partie autour de la tige 341 et qui se termine par une seconde barre transversale 344 pouvant être rapprochée ou éloignée de la première barre 343 pour le serrage de la ceinture 302. Ces barres 343 et 344 sont destinées à être respectivement bloquées contre deux zones de retournements 331 a et 332a incurvées selon un angle de 180° que présente la bande souple 330 à ses extrémités 331 et 332. L'incurvation de ces zones de retournement 331 a et 332a est conçue pour épouser la forme cylindrique des barres 343 et 344.

Un écrou 345 est monté sur le bout fileté 341 a contre une extrémité du fourreau 342, de sorte à régler le serrage de la ceinture 302 en rapprochant ou en éloignant par vissage ou dévissage la seconde barre transversale 343 de la première 344. On utilise de préférence un écrou 345 présentant une résistance satisfaisante au dévissage, tel qu'un écrou « freiné » de type « Nylstop ».

De préférence, ce moyen de connexion 340 comporte en outre une patte 346 pourvue d'une butée de sécurité 347 qui s'étend, à l'opposé de l'écrou 345, à partir de l'une des extrémités 332 de la bande souple 330 et qui est adaptée pour traverser une ouverture 331 b de la zone de retournement adjacente 331a en étant rappelée élastiquement en butée contre un bord de cette ouverture 331 b, radialement à l'extérieur de cette dernière. La butée 347 permet ainsi d'empêcher un relâchement de la ceinture 302, par exemple en cas de dévissage accidentel de l'écrou 345.

Les dispositifs 1 à 301 selon l'invention, une fois mis en place sur la jante monobloc 10 en étant serrés autour du creux de jante 15 via les moyens de connexion 140 à 340, permettent de combler le creux 15 de manière à s'opposer efficacement au déjantage de l'enveloppe de pneumatique. En effet, chacun de ces dispositifs 1 à 301 s'oppose au glissement dans ce creux 15 d'une zone circonférentielle d'un talon de l'enveloppe (typiquement du talon monté sur le siège de jante axialement externe 12 qui est adjacent au creux 15, dans le cas d'une jante asymétrique) et, par conséquent, au passage par-dessus le rebord de jante 14 de la zone diamétralement opposée à la précédente du même talon.

On notera que ces dispositifs 1 à 301 selon l'invention, qui sont formés par la ceinture 2 à 302 et par l'unique moyen de connexion 140 à 340 solidaire de celle-ci, sont constitués d'une seule pièce de structure relativement simple, légère et flexible pouvant être montée facilement et rapidement dans le creux de jante 15.

## Revendications

1. Dispositif (1, 101, 201, 301) destiné à être monté entièrement dans un creux (15) d'une jante de roue (10) monobloc de sorte à s'opposer au déjantage d'une enveloppe de pneumatique montée sur ladite jante, ledit dispositif comportant une ceinture (2, 102, 202, 302) à deux extrémités (131, 132 ou 331, 332) et un moyen de connexion (140, 340) desdites extrémités entre elles qui est destiné à serrer ladite ceinture sous forme annulaire autour dudit creux, **caractérisé en ce que** ladite ceinture comporte une pluralité d'éléments de comblement (20, 120, 220, 320), espacés entre lesdites extrémités, qui sont adaptés pour combler au moins partiellement ledit creux et qui sont reliés entre eux par l'intermédiaire d'au moins un élément souple de liaison (30, 130, 230, 330) destiné à former un secteur annulaire autour dudit creux.

2. Dispositif (1, 101, 201, 301) selon la revendication 1, **caractérisé en ce que** ledit ou chaque élément de liaison (30, 130, 230, 330) s'étend sur tout le périmètre de ladite ceinture (2, 102, 202, 302) et se termine par lesdites deux extrémités (131, 132 ou 331, 332).

3. Dispositif (1) selon la revendication 1 ou 2, **caractérisé en ce que** ledit ou chaque élément de liaison (30) comporte un câble métallique et/ou textile sensiblement inextensible.

4. Dispositif (101, 201, 301) selon la revendication 1 ou 2, **caractérisé en ce que** ledit élément de liaison (130, 230, 330) comporte une bande souple, telle qu'une bande métallique, qui est apte à être déformée dans une direction radiale.

5. Dispositif (1, 101, 201, 301) selon une des revendications 1 à 4, **caractérisé en ce que** chacun desdits éléments de comblement (20, 120, 220, 320) est traversé dans sa masse par ledit ou chaque élément de liaison (30, 130, 230, 330) et est solidarisé avec ce dernier.

6. Dispositif (1) selon les revendications 3 et 5, **caractérisé en ce que** ladite fixation mécanique est de type sertissage.

7. Dispositif (101) selon les revendications 4 et 5, **caractérisé en ce que** ladite fixation mécanique est de type vis-écrou.

8. Dispositif (201) selon la revendication 4, **caractérisé en ce que** lesdits éléments de comblement (220) sont respectivement rapportés par guidage transversal dans des glissières supérieures (222) qui sont formées sur des supports (221) solidarisés avec ladite bande souple (230), de sorte à régler le comblement dudit creux (15) dans le sens de sa largeur et de sa profondeur.

9. Dispositif (201) selon la revendication 8, **caractérisé en ce que** chaque glissière supérieure (222) présente une section trapézoïdale en contre dépouille, telle qu'une section en queue d'aronde.

10. Dispositif (201) selon la revendication 8 ou 9, **caractérisé en ce que** ladite ceinture (202) comporte une pluralité d'embases (223) qui sont respectivement rapportées sous lesdits supports (221) recevant lesdits éléments de comblement (220) et qui sont adaptées pour être montées sur un fond (18) dudit creux de jante (15), de sorte à régler la hauteur radiale de ladite ceinture dans ledit creux.

11. Dispositif (201) selon la revendication 10, **caractérisé en ce que** chacune desdites embases (223) est rapportée sous ledit support (221) correspondant par guidage transversal dans des glissières inférieures formées dans ledit support.

12. Dispositif (201) selon la revendication 11, **caractérisé en ce que** chaque élément de comblement (220) et chaque embase correspondante (223) sont tous deux pourvus de moyens de positionnement et de maintien (224 et 225) qui coopèrent avec ledit support (221) correspondant, de sorte à positionner et maintenir ledit élément de comblement et ladite embase sur et sous ledit support, respectivement.

13. Dispositif (301) selon la revendication 8 ou 9, **caractérisé en ce que** ladite ceinture (302) comporte plusieurs profilés (321) de section en U, espacés entre lesdites extrémités (331 et 332), qui forment respectivement lesdits supports et qui comportent chacun une âme (321 a) fixée sous ladite bande souple (330) et deux ailes (321 b et 321c) usinées en regard l'une de l'autre, de sorte à définir lesdites glissières (322).

14. Dispositif (1) selon la revendication 3, **caractérisé en ce que** ledit moyen de connexion comporte deux blocs d'accrochage dans lesquels sont respectivement fixées les deux extrémités ou groupes d'extrémités en regard dudit ou desdits câbles (30) et qui sont reliés entre eux par une vis les traversant, le degré de mise en tension dudit dispositif étant réglé par un écrou monté sur ladite vis contre l'un desdits blocs.

15. Dispositif (301) selon la revendication 4 ou l'une des revendications 8 à 13, **caractérisé en ce que** ledit moyen de connexion (340) comporte une tige (341) en forme de T à bout fileté (341 a) se terminant par une première barre transversale (343), et un fourreau (342) en forme de T qui est monté coaxialement autour de ladite tige et qui se termine par une seconde barre transversale (344) prévue à une distance réglable de ladite première barre pour le serrage de ladite ceinture (302), lesdites barres (343 et 344) étant destinées à être respectivement bloquées contre deux zones de retournements (331a et 332a) de ladite bande souple (330) formant lesdites extrémités (331 et 332) de ladite ceinture (302).

16. Dispositif (301) selon la revendication 15, **caractérisé en ce que** ledit élément de serrage (345) comporte un écrou freiné qui est monté sur ledit bout fileté (341a) de ladite tige (341), contre une extrémité dudit fourreau (342).

17. Dispositif (301) selon la revendication 15 ou 16, **caractérisé en ce que** ledit moyen de connexion (340) comporte en outre une patte (346) pourvue d'une butée de sécurité (347) qui s'étend à partir de l'une des extrémités (332) de ladite bande souple (330) et qui est adaptée pour traverser une ouverture (331 b) de ladite zone de retournement adjacente (331a) en étant rappelée élastiquement en butée contre un bord de ladite ouverture.

18. Dispositif (101) selon la revendication 4 ou l'une des revendications 8 à 13, **caractérisé en ce que** ledit moyen de connexion (140) comporte un doigt transversal (141) qui est adapté pour être verrouillé d'une manière réversible sur un cran d'arrêt (142) en forme de patte recourbée recouvrant ladite bande (130) en l'une desdites extrémités (131) de ladite ceinture (102) et qui relie entre eux deux bras (145 et 146) montés pivotants sur un axe transversal fixe de pivotement (144), lequel est solidaire de ladite bande en l'autre extrémité (132) de ladite ceinture, ledit moyen de connexion comportant en outre un levier de commande (143) monté pivotant sur un axe transversal mobile de pivotement (147) qui excentré par rapport audit axe fixe, de telle sorte que ladite ceinture soit respectivement serrée ou relâchée en éloignant ou en rapprochant ledit axe mobile dudit doigt lors du pivotement dudit levier.

19. Dispositif (1, 101, 201, 301) selon une des revendications précédentes, **caractérisé en ce que** lesdits éléments de comblement (20, 120, 220, 320) sont chacun constitués d'une matière plastique, tel qu'un polyamide 6 ou un polyamide 6.6.

20. Procédé de fabrication d'un dispositif (1, 101, 201) selon une des revendications 1 à 19, **caractérisé en ce qu'**il comprend un surmoulage desdits éléments de comblement (20, 120, 220) ou de leurs supports (221) respectifs sur ledit ou chaque élément de liaison (30, 130, 230).

21. Ensemble monté pour véhicule automobile comprenant une jante de roue (10) monobloc, une enveloppe de pneumatique comportant deux talons respectivement montés sur deux sièges axialement interne et externe (11 et 12) de ladite jante et un dispositif (1, 101, 201, 301) monté dans un creux (15) de ladite jante de sorte à s'opposer au déjantage de ladite enveloppe, **caractérisé en ce que** ledit dispositif est tel que défini à l'une des revendications 1 à 19.

22. Ensemble monté selon la revendication 21, **caractérisé en ce que** ladite jante (10) est de type asymétrique, ledit creux de jante (15) étant adjacent audit siège axialement externe (12).

23. Ensemble monté selon la revendication 21 ou 22, **caractérisé en ce que** ledit siège axialement externe (12) est délimité axialement par un rebord externe (14) de ladite jante (10) et par un bossage circonférentiel (16) s'étendant radialement vers l'extérieur et se prolongeant axialement et radialement vers l'intérieur par un bord axialement externe (19) dudit creux de jante (15), ledit bossage étant adapté pour s'opposer à un glissement dans ledit creux dudit talon monté sur ledit siège axialement externe (12).

## Claims

1. Device (1, 101, 201, 301) designed to be entirely fitted into a well (15) of a one-piece wheel rim (10) so as to prevent a tire cover fitted onto said rim from rolling off this rim, said device comprising a belt (2, 102, 202, 302) having two ends (131, 132 or 331, 332) and a connecting means (140, 340) for connecting said ends together, which means is intended to clamp said belt of annular shape around said well, **characterized in that** said belt includes a plurality of filling elements (20, 120, 220, 320), spaced apart between said ends, which elements are designed to at least partly fill said well and are connected together via at least one flexible linking element (30, 130, 230, 330) intended to form an annular sector around said well.

2. Device (1, 101, 201, 301) according to Claim 1, **characterized in that** said or each linking element (30, 130, 230, 330) extends over the entire perimeter of said belt (2, 102, 202, 302) and terminates at said two ends (131, 132 or 331, 332).

3. Device (1) according to Claim 1 or 2, **characterized in that** said or each linking element (30) comprises a substantially inextensible textile and/or metal cable.

4. Device (101, 201, 301) according to Claim 1 or 2, **characterized in that** said linking element (130, 230, 330) comprises a flexible band, such as as metal band, which is able to be deformed in a radial direction.

5. Device (1, 101, 201, 301) according to one of Claims 1 to 4, **characterized in that** each of said filling elements (20, 120, 220, 320) is penetrated right through it by said or each linking element (30, 130, 230, 330) and is fastened to the latter.

6. Device (1) according to Claims 3 and 5, **characterized in that** said mechanical fastening is of the crimping type.

7. Device (101) according to Claims 4 and 5, **characterized in that** said mechanical fastening is of the nut-and-bolt type.

8. Device (201) according to Claim 4, **characterized in that** said filling elements (220) are respectively attached by transversely guiding them in upper slideways (222) that are formed on supports (221) that are integral with said flexible band (230), so as to adjust the filling of said well (15) both in its width and depth directions.

9. Device (201) according to Claim 8, **characterized in that** each upper slideway (222) has an undercut trapezoidal cross section, such as a dovetail cross section.

10. Device (201) according to Claim 8 or 9, **characterized in that** said belt (202) includes a plurality of bases (223) which are respectively attached beneath said supports (221) that receive said filling elements (220) and which are designed to be fitted onto a bottom (18) of said rim well (15) so as to adjust the radial height of said belt in said well.

11. Device (201) according to Claim 10, **characterized in that** each of said bases (223) is attached beneath said corresponding support (221) by being transversely guided in lower slideways formed in said support.

12. Device (201) according to Claim 11, **characterized in that** each filling element (220) and each corresponding base (223) are both provided with positioning and retaining means (224 and 225) that cooperate with said corresponding support (221) so as to position and retain said filling element and said base on and beneath said support, respectively.

13. Device (301) according to Claim 8 or 9, **characterized in that** said belt (302) includes several U-sections (321), spaced apart between said ends (331 and 332), which sections form said respective supports and each have a web (321a) fastened beneath said flexible band (330) and two machined flanges (321b and 321c) that face each other, so as to define said slideways (322).

14. Device (1) according to Claim 3, **characterized in that** said connecting means comprises two catching blocks in which the two respective ends or groups of ends facing said cable or cables (30) are fastened, which catching blocks are joined together by a bolt that passes through them, the degree of tensioning of said device being regulated by a nut fitted onto said bolt against one of said blocks.

15. Device (301) according to Claim 4 or one of Claims 8 to 13, **characterized in that** said connecting means (340) comprises a T-shaped rod (341) with a threaded end (341a), which terminates in a first transverse bar (343), and a T-shaped sheath (342) that is mounted coaxially around said rod and terminates in a second transverse bar (344) designed to be at an adjustable distance from said first bar in order to tighten said belt (302), said bars (343 and 344) being designed to be respectively locked against two turn-over regions (331a and 332a) of said flexible band (330) that form said ends (331 and 332) of said belt (302).

16. Device (301) according to Claim 15, **characterized in that** said clamping element (345) comprises a lock nut mounted on said threaded end (341a) of said rod (341), against one end of said sheath (342).

17. Device (301) according to Claim 15 or 16, **characterized in that** said connecting means (340) further includes a tab (346) provided with a security stop (347) that extends from one of the ends (332) of said flexible band (330) and is designed to pass through an opening (331b) in said adjacent turn-over region (331a) being elastically returned in abutment against one edge of said opening.

18. Device (101) according to Claim 4 or one of Claims 8 to 13, **characterized in that** said connecting means (140) includes a transverse finger (141) that is designed to be locked reversibly onto a stop catch (142) in the form of a bent-over tab covering said band (130) at one of said ends (131) of said belt (102) and that binds together two arms (145 and 146) pivotally mounted on a fixed transverse pivot pin (144), which pin is integral with said band on the other end (132) of said belt, said connecting means further including a control lever (143) pivotally mounted on a movable transverse pivot pin (147) which is off-center relative to said fixed pin, in such a way that said belt is tightened or slackened, respectively, by moving said movable pin further away from or closer to said finger when pivoting said lever.

19. Device (1, 101, 201, 301) according to one of the preceding claims, **characterized in that** said filling elements (20, 120, 220, 330) are each made of a plastic, such as a 6 polyamide or a 6,6 polyamide.

20. Process for manufacturing a device (1, 101, 201) according to one of Claims 1 to 19, **characterized in that** it includes the overmolding of said filling elements (20, 120, 220) or of their respective supports (221) onto said or each linking element (30, 130, 230).

21. Fitted assembly for a motor vehicle, comprising a one-piece wheel rim (10), a tire cover having two beads fitted respectively onto two axially internal and external seats (11 and 12) of said rim, and a device (1, 101, 201, 301) fitted into a well (15) in said rim so as to prevent said cover from rolling off said rim, **characterized in that** said device is as defined in one of Claims 1 to 19.

22. Fitted assembly according to Claim 21, **characterized in that** said rim (10) is of asymmetric type, said rim well (15) being adjacent said axially external seat (12).

23. Fitted assembly according to Claim 21 or 22, **characterized in that** said axially external seat (12) is bounded axially by an external flange (14) of said rim (10) and by a circumferential hump (16) that extends radially outward and is extended axially and radially inward by an axially external edge (19) of said rim well (15), said hump being designed to prevent said bead fitted onto said axially external seat (12) from sliding in said well.

## Patentansprüche

1. Vorrichtung (1, 101, 201, 301), welche dazu bestimmt ist, vollständig in einer Vertiefung (15) einer einstückigen Radfelge (10) derart angebracht zu werden, dass sie dem Ablösen einer auf der Felge angebrachten Reifenhülle entgegenwirkt, wobei die Vorrichtung einen Gurt (2, 102, 202, 302) mit zwei Enden (131, 132 oder 331, 332) und ein Mittel (140, 340) zur Verbindung der Enden miteinander, welches dazu bestimmt ist, den Gurt ringförmig um die Vertiefung herum zu spannen, umfasst, **dadurch gekennzeichnet, dass** der Gurt eine Vielzahl von zwischen den Enden beabstandeten Füllelementen (20, 120, 220, 320) umfasst, welche, welche dazu ausgestaltet sind, wenigstens teilweise die Vertiefung zu füllen und welche miteinander über wenigstens ein flexibles Verbindungselement (30, 130, 230, 330) verbunden sind, welches dazu bestimmt ist, einen Ringsektor um die Vertiefung herum zu bilden.

2. Vorrichtung (10, 201, 301) nach Anspruch 1, **dadurch gekennzeichnet, dass** das oder jedes Verbindungselement (30, 130, 230, 330) sich über den gesamten Umfang des Gurts (2, 102, 202, 302) erstreckt und an den zwei Enden (131, 132 oder 331, 332) endet.

3. Vorrichtung (1) nach Anspruch 1 oder 2, **dadurch gekennzeichnet, dass** das oder jedes Verbindungselement (30) ein im Wesentlichen nicht dehnbares Metall- und/oder Textilkabel umfasst.

4. Vorrichtung (101, 201, 301) nach Anspruch 1 oder 2, **dadurch gekennzeichnet, dass** das Verbindungselement (130, 230, 330) ein flexibles Band umfasst, wie zum Beispiel ein Metallband, welches dazu ausgestaltet ist, in einer radialen Richtung verformt zu werden.

5. Vorrichtung (1, 101, 201, 301) nach einem der Ansprüche 1-4, **dadurch gekennzeichnet, dass** jedes der Füllelemente (20, 120, 220, 320) in seiner Masse durch das oder jedes Verbindungselement (30, 130, 230, 330) durchdrungen ist und mit dem letzteren fest verbunden ist.

6. Vorrichtung (1) nach den Ansprüchen 3 und 5, **dadurch gekennzeichnet, dass** die mechanische Befestigung!vom Crimptyp ist.

7. Vorrichtung (101) nach den Ansprüchen 4 und 5, **dadurch gekennzeichnet, dass** die mechanische Befestigung vom Schraube-Mutter-Typ ist.

8. Vorrichtung (201) nach Anspruch 4, **dadurch gekennzeichnet, dass** die Füllelemente (220) jeweils angebracht sind durch transversale Führung in oberen Gleitführungen (222), welche auf an dem flexiblen Band (230) befestigten Halterungen (221) derart ausgebildet sind, dass das Füllen der Vertiefung (15) in der Richtung seiner Breite und seiner Tiefe eingestellt wird.

9. Vorrichtung (201) nach Anspruch 8, **dadurch gekennzeichnet, dass** jede obere Gleitführung (222) einen trapezförmigen Querschnitt mit Hinterschneidung, wie zum Beispiel einen Querschnitt in Form eines Schwalbenschwanzes, aufweist.

10. Vorrichtung (201) nach Anspruch 8 oder 9, **dadurch gekennzeichnet, dass** der Gurt (202) eine Vielzahl von Sockeln (223) umfasst, welche jeweils unter den die Füllelemente (220) aufnehmenden Halterungen (221) angebracht sind und welche dazu ausgestaltet sind, an einem Boden (18) der Felgenvertiefung (15) derart angebracht zu werden, dass die radiale Höhe des Gurts in der Vertiefung eingestellt wird.

11. Vorrichtung (201) nach Anspruch 10, **dadurch gekennzeichnet, dass** jeder der Sockel (223) unter der entsprechenden Halterung (221) angebracht ist durch transversale Führung in unteren Gleitführungen, welche in der Halterung ausgebildet sind.

12. Vorrichtung (201) nach Anspruch 11, **dadurch gekennzeichnet, dass** jedes Füllelement (220) und jeder entsprechende Sockel (223) beide mit Positionierungs- und Haltemitteln (224 und 225) versehen sind, welche mit der entsprechenden Halterung (221) derart zusammenwirken, dass das Füllelement und der Sockel über bzw. unter der Halterung positioniert und gehalten werden.

13. Vorrichtung (301) nach Anspruch 8 oder 9, **dadurch gekennzeichnet, dass** der Gurt (302) mehrere zwischen den Enden (331 und 332) beabstandete Profile (321) mit U-förmigem Querschnitt umfasst, welche jeweils die Halterungen bilden und welche jeweils einen unter dem flexiblen Band (330) befestigten Steg (321a) und zwei einander gegenüber eingearbeitete Flügel (321b und 321c) umfassen, so dass die Gleitführungen (322) definiert werden.

14. Vorrichtung (1) nach Anspruch 3, **dadurch gekennzeichnet, dass** das Verbindungsmittel zwei Kopplungsblöcke umfasst, in welchen jeweils die zwei Enden oder Gruppen von Enden gegenüber dem oder den Kabeln (30) befestigt sind und welche untereinander über eine sie durchdringende Schraube verbunden sind, wobei der Spannungsgrad der Vorrichtung eingestellt ist über eine Mutter, welche an der Schraube gegen einen der Blöcke angebracht ist.

15. Vorrichtung (301) nach Anspruch 4 oder einem der Ansprüche 8-13, **dadurch gekennzeichnet, dass** das Verbindungsmittel (340) einen T-förmigen Schaft (341) mit Gewindeende (341a), welcher in einem ersten Querbalken (343) endet, und eine T-förmige Scheide (342), welche koaxial um den Schaft herum angebracht ist und welche in einem zweiten Querbalken (344) endet, welcher für das Spannen des Gurts (302) mit einem einstellbaren Abstand von dem ersten Balken vorgesehen ist, umfasst, wobei die Balken (343 und 344) dazu bestimmt sind, jeweils gegen zwei Umschlagbereiche (331a und 332a) des flexiblen Bands (330) arretiert zu werden, welche die Enden (331 und 332) des Gurts (302) bilden.

16. Vorrichtung (301) nach Anspruch 15, **dadurch gekennzeichnet, dass** das Spannelement (345) eine Sicherungsmutter umfasst, welche an dem Gewindestück (341a) des Schafts (341) gegen ein Ende der Scheide (342) angebracht ist.

17. Vorrichtung (301) nach Anspruch 15 oder 16, **dadurch gekennzeichnet, dass** das Verbindungsmittel (340) außerdem eine Lasche (346) umfasst, welche mit einem Sicherheitsanschlag (347) versehen ist, der sich ausgehend von einem der Enden (332) des flexiblen Bands (330) erstreckt und welcher dazu ausgestaltet ist, eine Öffnung (331b) des benachbarten Umschlagbereichs (331a) zu durchdringen, wobei er im Anschlag an einem Rand der Öffnung elastisch zurückgestellt wird.

18. Vorrichtung (101) nach Anspruch 4 oder einem der Ansprüche 8-13, **dadurch gekennzeichnet, dass** das Verbindungsmittel (140) einen Querfinger (141) umfasst, welcher dazu ausgestaltet ist, auf eine reversible Weise verriegelt zu werden an einer Arretierungsraste (142) in Form einer umgebogenen Lasche, welche das Band (130) an einem der Enden (131) des Gurts (102) bedeckt und welche zwei Arme (145 und 146) miteinander verbindet, die an einer festen transversalen Schwenkachse (144) angebracht sind, welche an dem anderen Ende (132) des Gurts mit dem Band fest verbunden ist, wobei das Verbindungsmittel außerdem einen Bedienhebel (143) umfasst, welcher schwenkbar an einer beweglichen transversalen Schwenkachse (147) angebracht ist, welche im Verhältnis zu der festen Achse derart exzentrisch ist, dass der Gurt gespannt oder gelockert wird, wenn die bewegliche Achse des Fingers bei dem Schwenken des Hebels entfernt oder angenähert wird.

19. Vorrichtung (1, 101, 201, 301) nach einem der vorhergehenden Ansprüche, **dadurch gekennzeichnet, dass** die Füllelemente (20, 120, 220, 320) jeweils gebildet sind aus einem Kunststoffmaterial wie zum Beispiel Polyamid 6 oder Polyamid 6.6.

20. Verfahren zur Herstellung einer Vorrichtung (1, 101, 201) nach einem der Ansprüche 1-19, **dadurch gekennzeichnet, dass** es ein Aufformen der Füllelemente (20, 120, 220) oder ihrer jeweiligen Halterungen (221) an dem oder jedem Verbindungselement (30, 130, 230) umfasst.

21. Zusammengesetzte Anordnung für ein Kraftfahrzeug, welche eine einstückige Radfelge (10), eine Reifenhülle, welche zwei Wülste umfasst, die entsprechend an zwei axial inneren und äußeren (11 und 12) Sitzflächen der Felge angebracht sind, und eine Vorrichtung (1, 101, 201, 301), welche in einer Vertiefung (15) der Felge derart angebracht ist, dass sie einem Ablösen der Hülle entgegenwirkt, **dadurch gekennzeichnet, dass** die Vorrichtung so wie in einem der Ansprüche 1-19 definiert ist.

22. Zusammengesetzte Anordnung nach Anspruch 21, **dadurch gekennzeichnet, dass** die Felge (10) vom asymmetrischen Typ ist, wobei die Felgenvertiefung (15) benachbart zu der axial äußeren Sitzfläche (12) ist.

23. Zusammengesetzte Anordnung nach Anspruch 21 oder 22, **dadurch gekennzeichnet, dass** die axial äußere Sitzfläche (12) axial begrenzt ist durch einen äußeren Rand (14) der Felge (10) und durch einen Umfangsbuckel (16), welcher sich radial nach außen erstreckt und sich axial und radial über einen axiak äußeren Rand (19) der Felgenvertiefung (15) nach innen verlängert, wobei der Buckel dazu ausgestaltet ist, einem Gleiten des an der axial äußeren Sitzfläche (12) angebrachten Wulstes in der Vertiefung entgegenzuwirken.
